# EUROPÄISCHE PATENTSCHRIFT

(11) **EP 0 992 400 B1**
(45) Veröffentlichungstag und Bekanntmachung des Hinweises auf die Patenterteilung: **24.01.2007**
(21) Anmeldenummer: 99116811.3
(22) Anmeldetag: 01.09.1999
(51) Int. Cl.: B60R 16/02, H02J 1/14

(54) **Verfahren und Steuereinrichtung zur Reduzierung der Bordnetzbelastung eines Kraftfahrzeugs**
Method and control device for reducing vehicle bord network overload
Procédé et dispositif de commande de réduction de surcharge du réseau de bord d'un véhicule

(30) Priorität: 28.09.1998 DE 19844512
(43) Veröffentlichungstag der Anmeldung: 12.04.2000
(73) Patentinhaber: Volkswagen Aktiengesellschaft, 38436 Wolfsburg (DE)
(72) Erfinder: Dierker, Uwe, Dipl.-Ing., 38550 Isenbüttel (DE); Michels, Karsten, Dipl.-Ing., 38165 Lehre (DE)
(74) Vertreter: Effert, Bressel und Kollegen

(56) Entgegenhaltungen:
- EP-A- 0 487 927
- EP-A- 0 601 300
- DE-A- 4 422 329
- DE-C- 3 936 638
- US-A- 5 426 589

## Beschreibung

Die Erfindung betrifft ein Verfahren zur Reduzierung der Bordnetzbelastung eines Kraftfahrzeugs gemäß Oberbegriff des Anspruchs 1 sowie eine Steuereinrichtung zur Durchführung des Verfahrens.

Es ist allgemein bekannt, zur Entlastung der Fahrzeugbatterie in kritischen Bordnetzsituationen eine Entlastung des Bordnetzes vorzunehmen, in dem eine Reduzierung der elektrischen Verbraucherlast vorgenommen wird.

Aus der DE 44 22 329 A1 ist ein Verfahren zum Betreiben eines elektrischen Fahrzeugbordnetzes bekannt, das den Ladezustand der Fahrzeugbatterie und den jeweiligen Wirkungsgrad des Generators berücksichtigt. Wird ein kritischer Bordnetzzustand festgestellt, werden einzelne Verbraucher abgeschaltet oder mit einer geringeren Energiezufuhr betrieben. So kann beispielsweise die elektrische Heizung eines Fahrzeugsitzes vorübergehend abgeschaltet oder nur noch im Impulsbetrieb betrieben werden. Dabei ist vorgesehen, daß den elektrischen Verbrauchern Prioritätsstufen zugeordnet sind, die eine Rangfolge der Abschaltung im Falle eines kritischen Bordnetzzustands angeben.

Aus der DE 39 36 638 C1 und der EP 0 487 927 B1 sind ebenfalls entsprechende Verfahren zur Sicherung der elektrischen Energieversorgung in einem Kraftfahrzeug bekannt, die im Falle eines schlechten Ladungszustandes der Fahrzeugbatterie eine Abschaltung von nicht notwendigen elektrischen Verbrauchern vorsehen.

Die bekannten Verfahren ordnen jedem elektrischen Verbraucher eine feste Abschaltpriorität zu, was im Hinblick auf unterschiedliche Betriebssituationen des Kraftfahrzeugs nachteilig sein kann.

Aus der EP 0 601 300 A1 , die als nächstliegender Stand der Technik betrachtet wird, ist ein Fahrzug bekannt, mit einer Brennkraftmaschine als Antriebsmotor, Sensoren zur Erfassung von Fahrzuständen, einer mit den Sensoren verbundenen Steuereinrichtung zur Beeinflussung der Brennkraftmaschine sowie elektrischen Verbrauchern, die aus einer Fahrzeugbatterie und/oder einem von dem Antriebsmotor antreibbaren Generator mit elektrischer Energie versorgbar sind, und beim Abschalten und Wiederanschalten der Brennkraftmaschine ihrerseits abschaltbar oder hinsichtlich ihres Energiebedarfs rückschaltbar sind. In der Steuereinrichtung sind bestimmten Fahrzuständen jeweils vorgegebene Typen von Verbrauchern zugeordnet, die auf der Basis der von den Sensoren gelieferten Signale fahrzustandsabhängig einzeln oder gruppenweise, gleichzeitig oder nacheinander entsprechend einer in der Steuereinrichtung abgelegten Rangfolge ab- oder rückschaltbar sind. Dabei ist weiter vorgesehen, dass eine Heckscheibenheizung auf einem Taktbetrieb unstellbar ist, wobei vorzugsweise die Taktzeiten in Abhängigkeit von einem Feuchtigkeitssensor und/oder Außentemperatur variabel einstellbar sind.

Der Erfindung liegt die Aufgabe zugrunde, ein Verfahren zur Reduzierung der Bordnetzbelastung eines Kraftfahrzeugs zu schaffen, mit dem eine möglichst geringe Batteriebelastung erzielbar ist, wobei Komforteinbußen weitgehend vermieden werden.

Die Lösung dieser Aufgabe erhält man mit dem in Anspruch 1 angegebenen Merkmalen. Es wird die jeweilige aktuelle Betriebssituation des Kraftfahrzeugs erfaßt, so daß elektrische Verbraucher im Falle eines kritischen Bordnetzzustandes in Abhängigkeit von der Betriebssituation abgeschaltet werden können. Die elektrischen Verbraucher erhalten zu diesem Zweck betriebssituationsabhängige Abschaltprioritäten. Diese Abschaltprloritäten berücksichtigen sicherheitsrelevante und komfortrelevante Kriterien, wobei als komfortrelevantes Kriterium die Wahrnehmung der Funktion eines elektrischen Verbrauchers berücksichtigt wird. Wird bei kritischem Bordnetzzustand beispielsweise die Sitzheizung eingeschaltet, obgleich eine Betriebssituation mit hohen Innenraurntemperaturen vorliegt, so kann entsprechend dem erfindungsgemäßen Verfahren der Sitzheizung eine hohe Abschaltpriorität zugeordnet werden und sofort eine Abschaltung der Sitzheizung erfolgen. Für die Insassen des Kraftfahrzeugs kann aufgrund der hohen Innenraumtemperatur davon ausgegangen werden, daß die abgeschaltete Sitzheizung nicht oder allenfalls als sehr geringe Komforteinbuße festgestellt wird. Würde dagegen eine sehr niedrige Innenraumtemperatur vorliegen, so könnte in dieser Betriebssituation der Sitzheizung eine geringe Abschaltpriorität zugeordnet werden.

Die Zuordnung von Abschaltprioritäten in Abhängigkeit von der jeweiligen Betriebssituation des Kraftfahrzeugs hat den Vorteil, daß in optimaler Weise eine Verbesserung der Bordnetzsituation geschaffen werden kann, wobei für die Fahrzeuginsassen entstehende Komforteinbußen ebenfalls situationsabhängig möglichst gering gehalten werden können.
Bei der Zuordnung der Abschaltprioritäten werden aber nicht in erster Linie Komfortkriterien berücksichtigt sondern sichercheitsrelevante Kriterien, die ebenfalls von den Betriebssituationen des Kraftfahrzeugs höher oder niedriger einzustufen sind.

Zur Beurteilung der jeweils aktuellen Betriebssituation werden Umgebungsinformationen und/oder Fahrzeugbetrietrinformationen ausgewertet. Als Umgebungsinformationen können dabei insbesondere die Außentemperatur und die Luftfeuchtigkeit berücksichtigt werden, während als Fahrzeugbetriebsinformationen beispielsweise die Fahrtrichtung und die Fahrgeschwindigkeit maßgeblich sein können.

Besonders vorteilhaft ist es, wenn den elektrischen Verbrauchern für jede mögliche Betriebssituation jeweils eine entsprechende Abschaltpriorität zugeordnet wird, da auf diese Weise eine optimale Anpassung der Verbraucherabschaltung an die unterschiedlichen Betriebssituationen erfolgen kann. Es können also einem einzelnen elektrischen Verbraucher mehrere Abschaltprioritäten für eine entsprechende Anzahl unterschiedlicher Betriebssituationen zugeordnet werden. Die Abschaltprioritäten können in einem Speicher zu den unterschiedlichen Betriebssituationen abgespeichert sein, so daß bei Vorliegen einer bestimmten Betriebssituation die entsprechend zugeordnete Abschaltpriorität aus dem Speicher abrufbar ist.

Der Erfindung liegt weiterhin die Aufgabe zugrunde, eine Steuereinrichtung zur Durchführung des erfindungsgemäßen Verfahrens zu schaffen.

Die Lösung dieser Aufgabe erhält man mit den in Anspruch 4 aufgeführten Merkmalen. Die Steuereinrichtung umfaßt ein Steuergerät, dem Datensignale über die aktuelle Betriebssituation des Kraftfahrzeugs und über den Bordnetzzustand zugeführt werden. In Abhängigkeit von den Datensignalen leitet das Steuergerät individuelle Abschaltprioritäten für unterschiedliche elektrische Verbraucher ab und steuert bei einem kritischen Bordnetzzustand Schaltmittel zur Abschaltung der elektrischen Verbraucher gemäß den zugehörigen Abschaltprioritäten an. Die elektrischen Verbraucher können entsprechend den jeweiligen Abschaltprioritäten vollständig abgeschaltet oder im Teillastbetrieb betrieben werden. Ist der Bordnetzzustand sehr kritisch, können auch entsprechend den Abschaltprioritäten die elektrischen Verbraucher mit geringer Abschaltpriorität weiterbetrieben werden, während nur die elektrischen Verbraucher mit hoher Abschaltpriorität vorübergehend abgeschaltet werden.

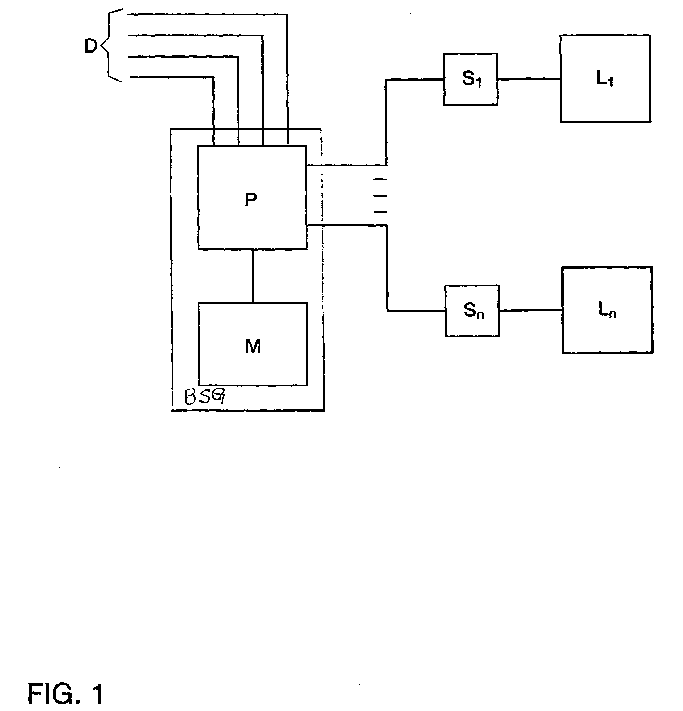

Anhand eines in der Zeichnung dargestellten Blockschaltbilds einer erfindungsgemäßen Steuereinrichtung wird die Erfindung nachfolgend näher erläutert.

Die Steuereinrichtung umfaßt ein Steuergerät P, welches als Mikroprozessor ausgebildet sein kann, sowie Schaltmittel S₁ bis Sₙ, über die das Steuergerät P elektrische Verbraucher L₁ bis Lₙ ein- und ausschalten kann. Das Steuergerät P ist außerdem mit einem Speicher M verbunden und vorzugsweise im Bordnetzsteuergerät integriert. Über Datenleitungen D ist das Steuergerät P direkt oder indirekt mit hier nicht dargestellten Sensoren oder anderen Einrichtungen verbunden, die Datensignale mit Informationen über die aktuelle Betriebssituation und/oder den Bordnetzzustand des Fahrzeugs an das Steuergerät P senden.

Über die Datenleitungen D kann das Steuergerät P Informationen über die Wetterlage, über Innenraumtemperaturen und beispielsweise über die Sitztemperatur eines Fahrzeugsitzes erhalten. Von dem Bordnetzsteuergerät BSG können dem Steuergerät Informationen über den Bordnetzzustand, über die Fahrgeschwindigkeit und beispielsweise über den Belastungsgrad des im Fahrzeug vorhandenen Generators zugeführt werden.

Im Speicher M können für den jeweiligen Fahrzeugtyp zu einer Vielzahl von möglichen Betriebssituationen zu jedem abschaltbaren elektrischen Verbraucher L₁ bis Lₙ unterschiedliche Abschaltprioritäten zugeordnet sein, so daß das Steuergerät P aus dem Speicher M zu jeder aktuellen Betriebssituation unter Berücksichtigung des jeweiligen Bordnetzzustandes die für diese Situation optimalen Abschaltprioritäten für die elektrischen Verbraucher L₁ bis Lₙ erhalten kann.

Ob ein elektrischer Verbraucher im Falle eines kritischen Bordnetzzustands ganz oder teilweise abgeschaltet wird, kann auch davon abhängig gemacht werden, ob ein mehr oder weniger kritischer Bordnetzzustand vorliegt. Das Steuergerät P wird im Falle eines als wenig kritisch eingestuften Bordnetzzustand(e)s nur die elektrischen Verbraucher abschalten, denen für die aktuelle Betriebssituation eine sehr hohe Abschaltpriorität zugeordnet ist .

Bei den elektrischen Verbrauchern L₁ bis Lₙ kann es sich beispielsweise um die Heckscheibenheizung, die Frontscheibenheizung, die Sitzheizung, die Innenraumbeleuchtung und um eine elektrische Innenraumheizung handeln. Elektrische Verbraucher, deren Funktion für die Sicherheit des Fahrzeugbetriebs absolut erforderlich sind, werden auch bei kritischem Bordnetzzustand nicht abgeschaltet.

### BEZUGSZEICHENLISTE

- P: Steuergerät
- D: Datenleitungen
- M: Speicher
- BSG: Bordnetzsteuergerät
- L₁ bis Lₙ: elektrische Verbraucher
- S₁ bis Sₙ,: Schaltmittel

## Patentansprüche

1. Verfahren zur Reduzierung der Bordnetzbelastung eines Kraftfahrzeugs, wobei im Falle eines kritischen Bordnetzzustands einzelne elektrische Verbraucher unter Berücksichtigung von den Verbrauchern zugeordneten Abschaltprioritäten abgeschaltet oder unter Berücksichtigung von den Verbrauchern zugeordneten Abschaltprioritäten mit reduzierter Energie versorgt werden, wobei eine Beurteilung der jeweils aktuellen Betriebssituation erfolgt und den elektrischen Verbrauchern (L₁ bis Lₙ) von der Betriebssituation abhängige Abschaltprioritäten zugeordnet werden, wobei zur Beurteilung der jeweils aktuellen Betriebssituation Umgebungsinformationen und/oder Fahrzeugbetriebsinformationen ausgewertet werden,
**dadurch gekennzeichnet, daß**
für die Abschaltprioritäten sicherheitsrelevante und komforrelevante Kriterien berücksichtigt werden, wobei als komfort relevantes Kriterium die Wahrnehmbarkeit der Funktion eines elektrischen Verbrauchers berücksichtig wird und bei hohen Innenraum- und/oder Umgebungstemperaturen die Wahrnehmbarkeit einer elektrischen Sitzheizung als gering eingestuft wird und diesem elektrischen Verbraucher eine hohe Abschaltpriorität zugeordnet ist, während bei sehr niedrigen Innenraum- und/oder
Umgebungstemperaturen die Wahmehmbarkeit der elektrischen Sitzheizung als hoch eingestuft wird und dieser eine niedrige Abschaltpriorität zugeordnet wird.

2. Verfahren nach Anspruch 1, **dadurch gekennzeichnet, daß** zu jeder möglichen Betriebssituation für jeden abschaltbaren elektrischen Verbraucher (L₁ bis Lₙ) eine bestimmte Abschattpriontät vorgesehen ist.

3. Verfahren nach einem der vorhergehenden Ansprüche, **dadurch gekennzeichnet, daß** die Wettersituation erfaßt wird und als Heizelemente ausgebildete elektrische Verbraucher in Abhängigkeit von der momentanen Wettersituation Abschaltprioritäten zugeordnet bekommen.

4. Steuereinrichtung zur Durchführung des Verfahrens nach einem der vorhergehenden Ansprüche, die ein Steuergerät (P) zur Berücksichtigung des Bordnetzzustands und vom Steuergerät (P) steuerbare Schaltmittel (S₁ bis Sₙ) zum Ein- und Ausschalten der elektrischen Verbraucher (L₁ bis Lₙ) umfaßt, wobei das Steuergerät (P) Informationen über den aktuellen Bordnetzzustand erhält, **dadurch gekennzeichnet, daß** das Steuergerät (P) Datensignale über die aktuelle Betriebssituation erhält und in Abhängigkeit von diesen Datensignalen individuelle Abschaltprioritäten für unterschiedliche elektrische Verbraucher (L₁ bis Lₙ) ableitet und entsprechen den Abschaltprioritäten bei einem kritischen Bordnetzzustand die Schaltmittel (S₁ bis Sₙ) zur Abschaltung der elektrischen Verbraucher (L₁ bis Lₙ) ansteuert, wobei zur Beurteilung der jeweils aktuellen Betriebssituation Umgebungsinformationen und/oder Fahrzeugbetriebsinformationen ausgewertet werden, für die Abschaltprioritäten sicherheitsrelevante und komfortrelevante Kriterien berücksichtigt werden, wobei als komfortrelevantes Kriterium die Wahrnehmbarkeit der Funktion eines elektrischen Verbrauchers berücksichtigt wird und bei hohen Innenraum- und/oder Umgebungstemperaturen die Wahrnehmbarkeit einer elektrischen Sitzheizung als gering eingestuft wird und diesem elektrischen Verbraucher eine hohe Abschaltpriorität zugeordnet wird, während bei sehr niedrigen Innenraum- und/oder Umgebungstemperaturen die Wahrnehmbarkeit der elektrischen Sitzheizung als hoch eingestuft wird und dieser eine niedrige Abschaltpriorität zugeordnet wird.

5. Steuereinrichtung nach Anspruch 4, **dadurch gekennzeichnet, daß** in einem Speicher (M) für jeden abschaltbaren elektrischen Verbraucher (L₁ bis Lₙ) zu unterschiedlichen Betriebssituationen gehörende Abschaltprioritäten abgelegt sind, die das Steuergerät (P) bei kritischem Bordnetzzustand abruft und zur Bestimmung der Abschaltfolge und/oder Abschaltdauer auswertet.

## Claims

1. Method for reducing the loading of a motor vehicle electrical system, with individual electrical loads being switched off, taking into account switch-off priorities which are assigned to the loads, or being supplied with less power, taking into account switch-off priorities which are assigned to the loads, if the vehicle electrical system is in a critical state, with the respectively current operating situation being assessed and switch-off priorities which are dependent on the operating situation being assigned to the electrical loads (L₁ to Lₙ), with information about the surroundings and/or vehicle operating information being evaluated for the purpose of assessing the respectively current operating situation,
**characterized in that**
safety-relevant and comfort-relevant criteria are taken into account for the switch-off priorities, with the comfort-relevant criterion taken into account being the ability to perceive the function of an electrical load, and the ability to perceive an electrical seat heater being classified as low and a high switch-off priority being assigned to this electrical load when the interior temperature and/or ambient temperature are/is high, whereas the ability to perceive the electrical seat heater is classified as high and a low switch-off priority is assigned to the said seat heater when the interior temperature and/or ambient temperature are/is very low.

2. Method according to Claim 1, **characterized in that**, for each possible operating situation, a specific switch-off priority is provided for each electrical load (L₁ to Lₙ) which can be switched off.

3. Method according to either of the preceding claims, **characterized in that** the weather situation is detected and electrical loads which are in the form of heating elements are assigned switch-off priorities as a function of the existing weather situation.

4. Control device for carrying out the method according to one of the preceding claims, which control device comprises a controller (P) for taking into account the state of the vehicle electrical system, and switching means (S₁ to Sₙ), which can be controlled by the controller (P), for switching the electrical loads (L₁ to Lₙ) on and off, with the controller (P) receiving information about the current state of the vehicle electrical system, **characterized in that** the controller (P) receives data signals about the current operating situation, and derives individual switch-off priorities for different electrical loads (L₁ to Lₙ) as a function of these data signals, and actuates the switching means (S₁ to Sₙ) to switch off the electrical loads (L₁ to Lₙ) in accordance with the switch-off priorities when the vehicle electrical system is in a critical state, with information about the surroundings and/or vehicle operating information being evaluated for the purpose of assessing the respectively current operating situation, and safety-relevant and comfort-relevant criteria being taken into account for the switch-off priorities, with the comfort-relevant criterion taken into account being the ability to perceive the function of an electrical load, and the ability to perceive an electrical seat heater being classified as low and a high switch-off priority being assigned to this electrical load when the interior temperature and/or ambient temperature are/is high, whereas the ability to perceive the electrical seat heater is classified as high and a low switch-off priority is assigned to the said seat heater when the interior temperature and/or ambient temperature are/is very low.

5. Control device according to Claim 4, **characterized in that** switch-off priorities which are associated with different operating situations are stored in a memory (M) for each electrical load (L₁ to Lₙ) which can be switched off, the controller (P) calling up these switch-off priorities when the vehicle electrical system is in a critical state and evaluating them to determine the switch-off sequence and/or switch-off time.

## Revendications

1. Procédé pour réduire la charge du réseau de bord d'un véhicule automobile, certains appareillages électriques étant déconnectés dans le cas d'une situation critique du réseau de bord en tenant compte des priorités de déconnexion associées aux appareillages ou étant alimentés avec une énergie réduite en tenant compte des priorités de déconnexion associées aux appareillages, une évaluation de la situation de fonctionnement actuelle respective ayant lieu et des priorités de déconnexion étant associées aux appareillages électriques (L₁ à Lₙ) en fonction de la situation de fonctionnement, des informations d'environnement et/ou des informations de fonctionnement du véhicule étant interprétées pour évaluer la situation de fonctionnement actuelle correspondante, **caractérisé en ce que** pour les priorités de déconnexion, il est tenu compte des critères relatifs à la sécurité et des critères relatifs au confort, le critère relatif au confort pris en compte étant la perceptibilité du fonctionnement d'un appareillage électrique et, en présence de températures intérieures et/ou ambiantes élevées, la perceptibilité d'un chauffage de siège électrique étant classée faible et une priorité de déconnexion élevée étant associée à cet appareillage électrique, alors qu'en présence de températures intérieures et/ou ambiantes très basses, la perceptibilité d'un chauffage de siège électrique est classée élevée et une priorité de déconnexion faible lui est alors associée.

2. Procédé selon la revendication 1, **caractérisé en ce qu'**une priorité de déconnexion donnée est prévue pour chaque appareillage électrique déconnectable (L₁ à Lₙ) pour chaque situation de fonctionnement possible.

3. Procédé selon l'une des revendications précédentes, **caractérisé en ce que** la situation météorologique est détectée et que les appareillages électriques réalisés sous la forme d'éléments chauffants reçoivent des priorités de déconnexion en fonction de la situation météorologique momentanée.

4. Dispositif de commande pour mettre en oeuvre le procédé selon l'une des revendications précédentes, lequel comprend un appareil de commande (F) destiné à tenir compte de l'état du réseau de bord et des moyens de commutation (S₁ à Sₙ) commandables par l'appareil de commande (P) pour mette en marche ou arrêter les appareillages électriques (L₁ à Lₙ), l'appareil de commande (P) contenant des informations sur l'état actuel du réseau de bord, **caractérisé en ce que** l'appareil de commande (P) reçoit des signaux de données sur la situation de fonctionnement actuelle et déduit des priorités de déconnexion individuelles pour les différents appareillages électriques (L₁ à Lₙ) en fonction de ces signaux de données et, conformément aux priorités de déconnexion et en présence d'une situation critique du réseau de bord, commande les moyens de commutation (S₁ à Sₙ) pour déconnecter les appareillages électriques (L₁ à Lₙ), des informations d'environnement et/ou des informations de fonctionnement du véhicule étant interprétées pour évaluer la situation de fonctionnement actuelle correspondante, des critères relatifs à la sécurité et des critères relatifs au confort étant pris en compte pour les priorités de déconnexion, le critère relatif au confort pris en compte étant la perceptibilité du fonctionnement d'un appareillage électrique et, en présence de températures intérieures et/ou ambiantes élevées, la perceptibilité d'un chauffage de siège électrique étant classée faible et une priorité de déconnexion élevée étant associée à cet appareillage électrique, alors qu'en présence de températures intérieures et/ou ambiantes très basses, la perceptibilité d'un chauffage de siège électrique est classée élevée et une priorité de déconnexion faible lui est alors associée.

5. Dispositif de commande selon la revendication 4, **caractérisé en ce que** les priorités de déconnexion associées à différentes situations de fonctionnement sont enregistrées dans une mémoire (M) pour chaque appareillage électrique (L₁ à Lₙ) déconnectable, lesquelles sont consultées par l'appareil de commande (P) en présence d'une situation critique du réseau de bord et interprétées pour déterminer la séquence de déconnexion et/ou la durée de déconnexion.
